# EUROPEAN PATENT SPECIFICATION

(11) **EP 3 240 132 B1**
(45) Date of publication and mention of the grant of the patent: **30.12.2020**
(21) Application number: 15871845.2
(22) Date of filing: 02.12.2015
(51) Int. Cl.: H02H 9/04, H01H 37/76

(54) **PLUG-IN TYPE SURGE PROTECTOR**
STECKERARTIGER ÜBERSPANNUNGSSCHUTZ
PARASURTENSEUR DU TYPE REMPLAÇABLE

(30) Priority: 24.12.2014 CN 201410836041
(43) Date of publication of application: 01.11.2017
(73) Proprietor: Seari Electric Technology Co., Ltd., Shanghai 200063 (CN); Shanghai Noark Electric Co., Ltd., Shanghai 200063 (CN)
(72) Inventor: YANG, Fan, Shanghai 200063 (CN); ZHANG, Dongjun, Shanghai 200063 (CN); YAN, Pengbin, Shanghai 200063 (CN)
(74) Representative: Osha Liang
(86) International application number: PCT/CN2015/096200
(87) International publication number: WO 2016/101776

(56) References cited:
- CN-A- 1 592 021
- CN-A- 102 340 136
- CN-A- 102 412 100
- DE-U1-202004 006 227
- JP-A- 2014 155 340
- US-A1- 2004 246 644

## Description

### BACKGROUND OF THE INVENTION

### 1. Field of the Invention

The present invention relates to the field of low-voltage electric apparatus, more particularly, relates to a surge protection device in a low-voltage electric apparatus.

### 2. The Related Art

A surge protection device comprises a non-linear element, which is usually a Metal Oxide Varistor (MOV). After long-time usage or overload, the MOV will be aging and thereby generate heat. An aged MOV with heat emission will influence the performance of the MOV, and will cause unexpected fault or danger. A tripping mechanism is arranged in the surge protection device in order to prevent a system from faults or even a disaster such as a fire caused by the aged or overheated MOV, the tripping mechanism is connected with the MOV in series. The tripping mechanism will separate the MOV from the circuit when the temperature rises, and provide a local and/or remote state notification.

In prior art, a pluggable surge protection device is disclosed. A pluggable module of the surge protection device comprises a shell, a plug, a varistor, an overheating protector, an indicator and a spring. The shell comprises a bottom cover, an intermediate body and a top cover. A bottom surface of the bottom cover is a plane, and a front surface of the bottom cover is open. The top cover covers the front opening of the bottom cover to form a single unit pluggable module. A front surface of the intermediate body is open, and a bottom surface of the intermediate body can be fixed above the bottom cover or fixed above another intermediate body. The top cover covers the front opening of the intermediate body to form multiple units pluggable modules. A base of the surge protection device comprises a shell, a clamping plate, a spring, a wiring board, a wiring base, a screw, a wiring terminal and a micro switch. The shell is provided with a U-shaped opening. The size of the shell is the same as that of the pluggable module. The base further comprises a socket which is matched with the plug of the pluggable module. The base can be inserted with a single unit pluggable module or multiple units pluggable modules. However, such a pluggable surge protection device has the following defects: 1) A local state indication is not able to provide different indications that can be distinguished obviously, such as green/red indications. 2) The protection level and the flow leakage capacity of a single MOV is limited, when a higher leakage capacity is required, two or more MOVs shall be connected in parallel. Then, two or more tripping mechanisms will be adopted. However, it is not able to ensure that the two or more MOVs can be tripped at a same time when the temperature rises. It is possible that only one or a part of the tripping mechanisms is tripped. The tripping mechanisms cannot keep the original protection level and the flow leakage capacity after one or a part of the tripping mechanisms has been tripped, then the product will be overloaded and the MOVs may explode or burn.

According to another technical solution in prior art, a plurality of MOVs can be tripped synchronously. In this technical solution, a plurality of MOVs are connected in parallel, and then the connected MOVs are connected with a tripping device in series. However, according to this solution, a wiring piece and an electrode are connected through a conductive piece welded with a low-temperature alloy. The low-temperature alloy is welded on both joints between the wiring piece and the conductive piece, and the conductive piece and the electrode, so that two welding spots are formed. The defect of such a structure is that when a large impact current occurs or when the MOV is aged, one welding spot may be disconnected in advance while the other welding spot is still connected. Then, although the MOV has been disconnected from the circuit, the tripping device does not act and does not provide a fault indication, which may cause the electrical devices to face a risk of being damaged without a protection of the surge protection device.

Document DE 20 2004 006227 U1 describes an overvoltage protection device for protection of low voltage electrical installations. The device comprises an optical status display comprising a hemispherical pivoting element which is pivotally supported in the housing and which is connected to a plastic element via a crosspiece which acts on the pivoting element outside of an axis of rotation of the pivoting element.

### SUMMARY

The present invention provides a pluggable surge protection device that can realize synchronous tripping of multiple nonlinear elements and have a fault indication capability.

According to an embodiment of the present invention, a pluggable surge protection device is provided. The pluggable surge protection device comprises a base and at least one pluggable module. The base is provided with a mounting opening, a pressing plate and a micro switch are arranged in the base, the micro switch is located beneath the pressing plate. The at least one pluggable module is mounted to the base through a positioning mechanism, the at least one pluggable module is mounted in the mounting opening. Each pluggable module comprises: a shell, a first contact piece, a second contact piece, a non-linear protection element, a releasing lever and an indication component. The shell is provided with a mounting bracket formed therein, an indication window is formed on the top of the shell. The first contact piece and the second contact piece are mounted in the shell for electrical connection. The non-linear protection element is mounted in the shell. A first pin of the non-linear protection element is connected with the first contact piece. A second pin of the non-linear protection element is connected with the second contact piece through an intermediate conductor. The intermediate conductor and the second pin are connected through a low-melting-point alloy. The releasing lever is connected to a first spring, the releasing lever is linked with the intermediate conductor, the releasing lever comprises a lower extension portion. The indication component is mounted on the top of the shell, the indication component moves horizontally and indication component is connected to a second spring. The second spring is mounted between the indication component and the shell. When the non-linear protection element works normally, the second pin is electrically connected with the second contact piece through the intermediate conductor, the releasing lever is supported by the intermediate conductor, the first spring is compressed, the indication component is restricted by the releasing lever to be aligned with the position of the indication window, and the second spring is compressed. When the non-linear protection element works abnormally and causes a rise in temperature, the low-melting-point alloy is softened, the first spring is released and pushes the releasing lever and the intermediate conductor to move, the electrical connection is cut off. The lower extension portion contacts the pressing plate and the pressing plate triggers the micro switch. The releasing lever is no longer restricting the indication component, and the second spring is released and pushes the indication component to move away from the position of the indication window.

According to an embodiment, the intermediate conductor comprises a U-shaped bracket and a flexible connection piece. The first contact piece and the second contact piece are located in two sides of the shell respectively, the first contact piece and the second contact piece extend downwards and out of the shell. The non-linear protection element is located between the first contact piece and the second contact piece, a first pin of the non-linear protection element is directly connected with the first contact piece, a second pin of the non-linear protection element is connected with the second contact piece through the U-shaped bracket and the flexible connection piece, the second pin is connected with the U-shaped bracket through the low-melting-point alloy.

According to an embodiment, the releasing lever is mounted in the U-shaped bracket, the releasing lever is provided with a protruding step body on the top, the first spring is mounted between the top of the releasing lever and the shell. The lower extension portion of the releasing lever extends to a position beneath the U-shaped bracket. When the non-linear protection element works normally, the releasing lever is supported by the U-shaped bracket, the first spring is compressed, the indication component is restricted by the protruding step body of the releasing lever to be aligned with the position of the indication window, the second spring is compressed. When the non-linear protection element works abnormally and causes a rise in temperature, the low-melting-point alloy is softened, the first spring is released and pushes the releasing lever and the U-shaped bracket to move downwards, the lower extension portion moves downwards and contacts the pressing plate, the protruding step body of the releasing lever is no longer restricting the indication component, the second spring is released and pushes the indication component to move away from the position of the indication window.

According to an embodiment, the U-shaped bracket is made of a metal material, a first pin of the U-shaped bracket is welded with a second pin of non-linear protection element through the low-melting-point alloy. The flexible connection piece is a flexible metal belt and is connected between the second pin of the U-shaped bracket and the second contact piece. The first contact piece or the second contact piece is provided with a notch.

According to an embodiment, the non-linear protection element comprises a plurality of voltage-sensitive chips which are arranged in a superposition mode, the plurality of voltage-sensitive chips are connected in parallel through a short circuit bus.

According to an embodiment, the non-linear protection element further comprises a gas discharge tube, the gas discharge tube is connected in series with the plurality of voltage-sensitive chips which are connected in parallel. An insulating plate is arranged between the gas discharge tube and the pressure-sensitive chip.

According to an embodiment, two ends of the pressing plate are provided with circular protrusions, a circular hole is formed in the base, circular protrusions are mounted in the circular hole, and the pressing plate is rotatably mounted on the base.

According to an embodiment, the positioning mechanism comprises: a first positioning element mounted at the bottom of the shell of the pluggable module, a second positioning element mounted on the base, an accommodation hole arranged on the base for accommodating the lower releasing lever. Two first positioning elements are arranged along axis b and are symmetric about axis a, the two second positioning elements are arranged along axis b and are symmetric about axis a. The two first positioning elements and the two second positioning elements are aligned with each other respectively. Two accommodation holes are arranged along axis a and are symmetric about axis b, a lower releasing lever is aligned with one of the accommodation holes. Axis a is a longitudinal symmetry axis of the base, and axis b is a transverse symmetry axis of each pluggable module; axis a and axis b are perpendicular to each other.

According to an embodiment, the positioning mechanism further comprises: longitudinal convex strips, transverse convex strips and grooves. The longitudinal convex strips are formed on both two sides of the shell. The transverse convex strips are formed on both two sides of the shell and are adjacent to the longitudinal convex strip. The grooves are formed in the base. The shell is inserted into the base, the longitudinal convex strips are in contact with the base and presses the base. The base is subjected to a deformation and the mounting opening is enlarged. The shell is mounted in place, the longitudinal convex strips are clamped into the grooves, the base recovers from deformation and mounting opening is restored. The grooves and the longitudinal convex strips fix the shell on the base. The transverse convex strips are pried, the base is subjected to a deformation again and the mounting opening is enlarged, and the shell is detached from the base.

According to an embodiment, a lower end of the longitudinal convex strip protrudes. The protruded lower end is arc-shaped or is provided with bidirectional inclined surfaces.

The pluggable surge protection device of the present invention can realize synchronous tripping of multiple nonlinear elements with a safe and reliable tripping accurate state indication. The nonlinear elements are connected in parallel with a plurality of voltage-sensitive chips, and then the parallel circuit is connected with a gas discharge tube in series, so that the circuit can adapt to high-energy waveform impact. A stopping positioning mechanism is arranged on a pluggable module and a base, the pluggable module can be matched with the base in a normal position or in a rotated position with a 180° rotation. The stopping positioning mechanism further enables the pluggable module and the base to be firmly matched without loose.

### BRIEF DESCRIPTION OF THE DRAWINGS

The above and other features, natures, and advantages of the invention will be apparent by the following description of the embodiments incorporating the drawings, wherein,
FIG. 1 illustrates a structural diagram of a pluggable surge protection device according to an embodiment of the present invention.
FIG. 2 illustrates a cross-sectional schematic diagram of an electrical connection of a pluggable surge protection device according to an embodiment of the present invention.
FIG. 3 illustrates a connection schematic diagram of a non-linear protection element of a pluggable surge protection device according to an embodiment of the present invention.
FIG. 4 illustrates a connection schematic diagram of a non-linear protection element of a pluggable surge protection device according to an embodiment of the present invention from another perspective.
FIG. 5A and FIG. 5B illustrate a structure diagram and a circuit diagram of a non-linear protection element of a pluggable surge protection device according to an embodiment of the present invention.
FIG. 6 illustrates a structural diagram of a pluggable surge protection device in a normal working state according to an embodiment of the present invention.
FIG. 7 illustrates a structural diagram of a pluggable surge protection device in a fault state according to an embodiment of the present invention.
FIG. 8 illustrates a matching schematic diagram of a pressing plate and a base of a pluggable surge protection device according to an embodiment of the present invention.
FIG. 9 illustrates a structural diagram of a positioning mechanism of a pluggable surge protection device according to an embodiment of the present invention, wherein a first positioning element and a second positioning element are shown.
FIG. 10 illustrates a structural diagram of a positioning mechanism of a pluggable surge protection device according to an embodiment of the present invention, wherein longitudinal convex strips and transverse convex strips are shown.
FIG. 11 illustrates a cross-sectional view of a mating condition of a positioning mechanism of a pluggable surge protection device according to an embodiment of the present invention.

### DETAILED DESCRIPTION OF EMBODIMENTS

Firstly, the term "connect" used in this specification is described herein. The specification relates to a mechanical and electrical structure, therefore, the term "connect" comprises two meanings of mechanical connection and electrical connection. A mechanical connection shall meet requirements of mechanical strength and mechanical operation, and an electrical connection shall meet requirements of electrical conduction. For a skilled person in the art, considering context, it shall be clear that each "connect" used in the specification shall refer to a mechanical connection, an electrical connection or both.

The invention provides a thermal tripping mechanism of a surge protection device and a state indication device thereof. The mechanism and device are safe and reliable, and have accurate state indication. When a plurality of MOVs are used, the plurality of MOVs can be tripped synchronously. Whatever a module is in a normal position and or in a position which is rotated by 180°, the module can be perfectly matched with a base.

In general, the surge protection device provided by the present invention comprises a base, a pluggable module inserted into the base, at least one MOV arranged in the pluggable module, a tripping device for separating the MOV from a circuit and a state indication device of the tripping device. A sliding rod is arranged on the tripping device, and pressure is applied to the sliding rod. One end of the sliding rod is in contact with a local state indication component, the other end of the sliding rod will contact with a pressing plate of a remote state indication switch after action. When the surge protection device is in a normal working state, the local state indication component is located at a position corresponding to an indication window under the restriction of the sliding rod. When the MOV is degraded or overloaded, the low-melting-temperature alloy is melted, the sliding rod moves under the action of a spring force, and the MOV is separated from the circuit. The local state indication component is no longer restricted by the sliding rod at this moment and will slide out of the indication window under the action of the spring force, so that a fault state is indicated. Meanwhile, the sliding rod triggers a pressing plate arranged on the base, the pressing plate triggers the remote state indication switch to act and indicate a corresponding state indication. Because the local state indication component is located at one end of the sliding rod, and the remote state indication switch is located at the other end of the sliding rod, during a movement process of the sliding rod, the sliding rod contacts the local state indication component or the pressing plate of the remote state indication switch only at a starting state or a stopping state. So no tripping fault due to the influence of state indication components will occur during the movement process of the sliding rod. A soft connection is applied to the tripping mechanism. Only a single low-temperature alloy welding broken point is provided, so that the action is more reliable and the state indication is more accurate. Meanwhile, according to the scheme, a plurality of MOVs can be connected in parallel first and then connected with a release in series, so as to realize synchronous tripping of multiple MOVs. Further, an anti-misplug device and the pressing plate of the remote state indication switch are arranged symmetrical, so that the pluggable module can perfectly match with the base when it is positioned at a normal position or a position which is rotated by 180°. It is more convenient for assembly and connection. The invention further provides a stop anti-loose design, the principle of the device is realized by utilizing deformation of plastic to carry out locking and arc guiding functions.

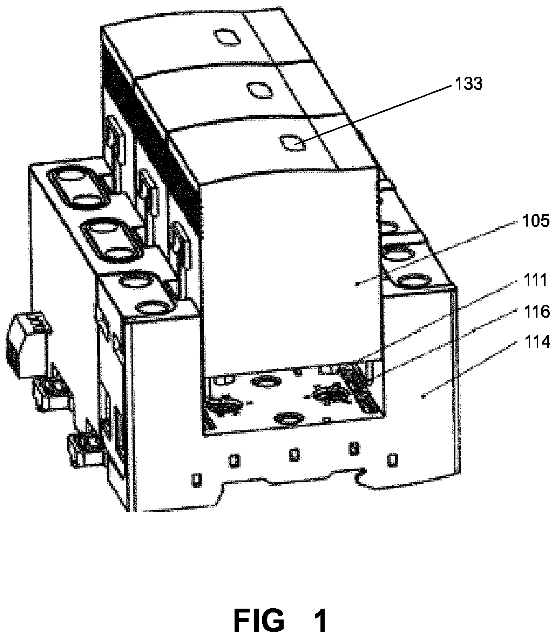

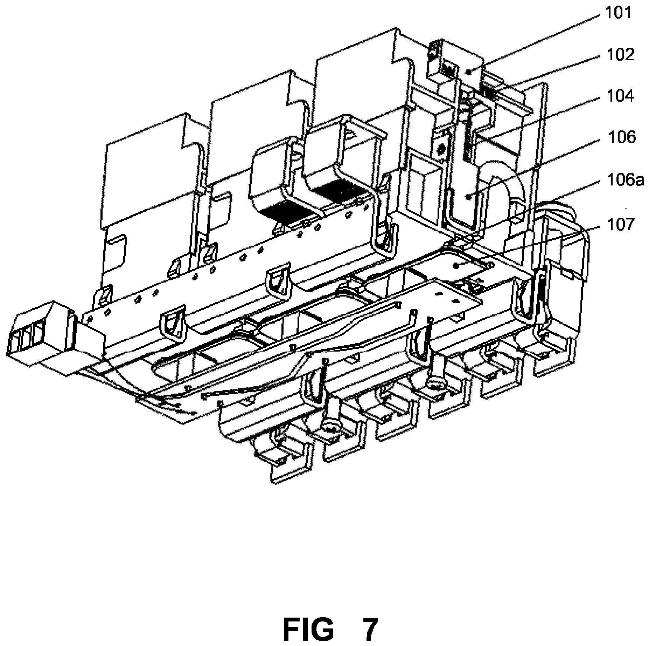

The technical solution of the present invention is described in detail below. Referring to FIG. 1∼FIG. 7, a pluggable surge protection device according to an embodiment of the invention is illustrated.

The pluggable surge protection device comprises: a base 114 and at least one pluggable module 105. The base 114 is provided with a mounting opening for accommodating the pluggable module 105. The base 114 is provided with a multiphase structure and is able to accommodate multiple pluggable modules 105 at the same time. According to the embodiment shown in FIG. 1, a plurality of pluggable modules 105 are arranged on the base 114 side by side so as to be used for protecting various power supply systems. A pressing plate 107 and a micro switch 108 are arranged in the base 114, the micro switch 108 is located beneath the pressing plate 107. The functions of the pressing plate 107 and a micro switch 108 will be described in detail below.

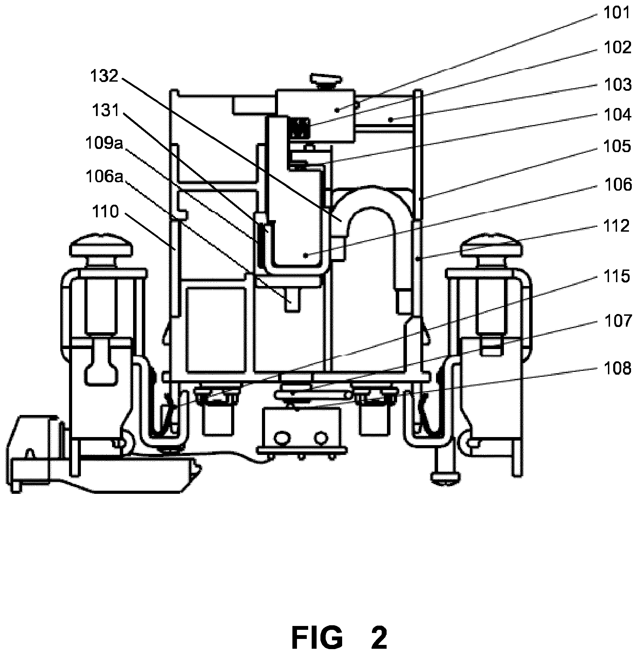

FIG. 2, FIG. 3 and FIG. 4 illustrate an internal structure of the pluggable module 105 and a structure of a non-linear protection element disposed therein.

The at least one pluggable module 105 is mounted to the base 114 through a positioning mechanism. The at least one pluggable module 105 is mounted in the mounting opening, each pluggable module 105 comprises: a shell 118, a first contact piece 110, a second contact piece 112, a non-linear protection element 109, a releasing lever 106 and an indication component 101.

The shell 118 is a housing of the pluggable module 105. As shown in the drawings, a mounting bracket is formed within the shell 118 for mounting various components. An indication window 133 is formed on the top of the shell 118. The first contact piece 110 and the second contact piece 112 are mounted in the shell 118. The first contact piece 110 and the second contact piece 112 are located at two sides of the shell 118 respectively. The first contact piece 110 and the second contact piece 112 extend downwards and out of the shell 118. As shown in FIG. 2, the first contact piece 110 and the second contact piece 112 are electrically connected with a contact pedestal on the base to form a conductive path. The non-linear protection element 109 is mounted in the shell 118, the non-linear protection element 109 is located between the first contact piece 110 and the second contact piece 112.

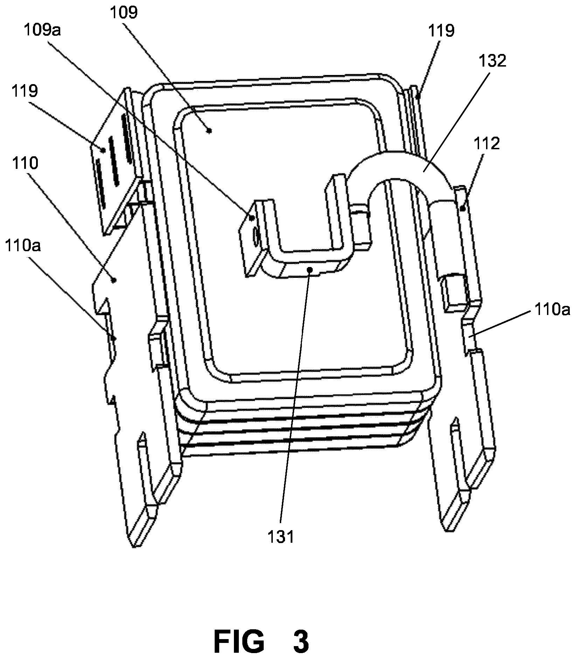

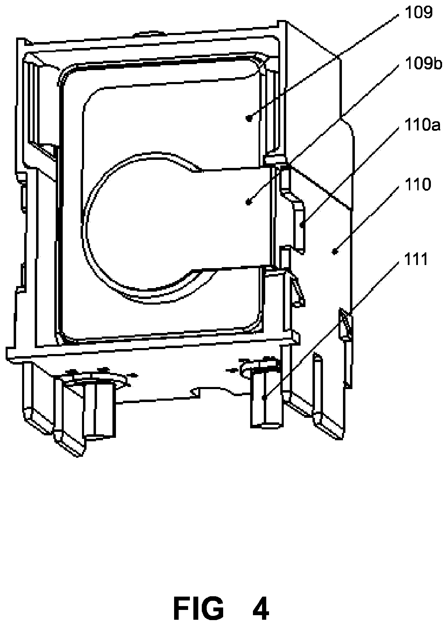

As shown in FIG. 3 and FIG. 4, a first pin 109b of the non-linear protection element 109 is directly connected with the first contact piece 110, a second pin 109a of the non-linear protection element 109 is connected with the second contact piece 112 through a U-shaped bracket 131 and a flexible connection piece 132. The U-shaped bracket 131 and the flexible connection piece 132 are made of a conductive material, the second pin 109b is connected with them through a low-melting-point alloy. According to the embodiment shown in FIG. 3, the U-shaped bracket 131 is made of a metal material. A first pin of the U-shaped bracket 131 is welded with a second pin 109a of non-linear protection element 109 through a low-melting-point alloy. The flexible connection piece 132 is a flexible metal belt and is connected between the second pin of the U-shaped bracket 131 and the second contact piece 112. It should be understood that the U-shaped bracket 131 and flexible connection piece 132 form an intermediate conductor. In one aspect, the intermediate conductor forms a conductive path. In another aspect, the intermediate conductor supports the releasing lever 106 when the low-melting-point alloy is not softened, when the low-melting-point alloy is heated and softened, the intermediate conductor moves along with the releasing lever 106 and the conductive path is cut off. Implementation of the intermediate conductor is not limited to the U-shaped bracket and the flexible connection piece as described here, the intermediate conductor may be implemented in other ways while achieving the same function. According to the illustrated embodiment, the first contact piece 110 and the second contact piece 112 are provided with notches 110a. The function of the notch 110a is to facilitate a welding process of the contact pieces. FIG. 4 also illustrates a first positioning element 111. It should be understood that, in practice, it is not necessary that both contact pieces be provided with notches 110a. However, considering the universality of spares, the first contact piece 110 and the second contact piece 112 will use a same spare. Therefore, both the first contact piece 110 and the second contact piece 112 are provided with notches.

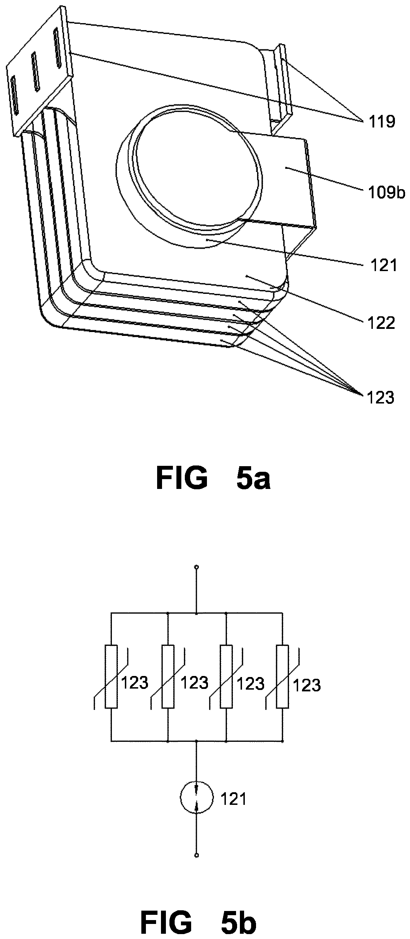

According to an embodiment, the non-linear protection element 109 comprises a plurality of voltage-sensitive chips 123 which are arranged in a superposition mode. According to an embodiment, the non-linear protection element 109 further comprises a gas discharge tube 121. FIG. 5A and FIG. 5B illustrate a structure diagram and a circuit diagram of a non-linear protection element of a pluggable surge protection device according to an embodiment of the present invention. As shown in FIG. 5a and FIG. 5b, the plurality of voltage-sensitive chips 123 are arranged in a superposition mode and the plurality of voltage-sensitive chips 123 are connected in parallel through a short circuit bus 119. A flux of the non-linear protection element can be improved by connecting the plurality of voltage-sensitive chips 123 in parallel through the short circuit bus 119. The gas discharge tube 121 is connected in series with the plurality of voltage-sensitive chips which are connected in parallel 123. Connecting the gas discharge tube 121 in series can reduce a leakage current of the voltage-sensitive chip and prolong a service life of the elements. Continue with FIG. 5a, an insulating plate 122 is arranged between the gas discharge tube 121 and the pressure-sensitive chip 123. The insulating plate 122 makes the gas discharge tube 121 be electrically insulated from the pressure sensitive chip 123. The first pin 109b of the non-linear protection element 109 is led out from the side of the gas discharge tube 121, the second pin 109a is led out from the side of the voltage-sensitive chip 123 (see FIG. 3).

Back to FIG. 2, the releasing lever 106 is mounted in the U-shaped bracket 131, a body of the releasing lever 106 is placed in a U-shaped opening of the U-shaped bracket 131. The releasing lever 106 is provided with a protruding step body on the top. It should be noted that the protruding step body may also increase the strength of the releasing lever. A first spring 104 is mounted between the top of the releasing lever 106 and the shell 118. A lower extension portion 106a of the releasing lever extends to a position beneath the U-shaped bracket 131. The lower extension portion 106a has a downward projection. An indication component 101 is arranged on the top of the shell 118, the indication component 101 can move horizontally. A second spring 102 is mounted between the indication component 101 and the shell 118. According to the embodiment illustrated in FIG. 2, a supporting component 103 is provided on the top of the shell. The indication component 101 moves along the supporting component 103. The supporting component 103 is arranged horizontally. The second spring 102 is arranged between the indication component 101 and the supporting component 103. The supporting component 103 and the indication component 101 have different colors. For example, the supporting component 103 is red and the indication component 101 is green. Such that different colors will be shown when observing the support component 103 or the indication component 101 through the indication window 133, which can indicate different states.

Continue with FIG. 2, the base 114 comprises a pressing plate 107 and a micro switch 108. The micro switch 108 is located beneath the pressing plate 107. The projection of the lower extension portion 106a moves downward and contacts the pressing plate 107. The pressing plate 107 triggers the micro switch 108. The purpose of the pressing plate 107 is to enable a plurality of micro switches 108 to act synchronously. Each pluggable module 105 corresponds to a micro switch 108. Due to the fact that the pluggable module 105 may be inserted with a 180° rotation, the pluggable module 105 cannot trigger the micro switch 108 when it is inserted with the rotation. With the pressing plate 107, no matter how the pluggable module 105 is inserted, the micros witch 108 can be triggered by the pressing plate 107. And, a plurality of micro switches 108 can be simultaneously triggered by the pressing plate 107, so that the cost is reduced and the structure is simplified.

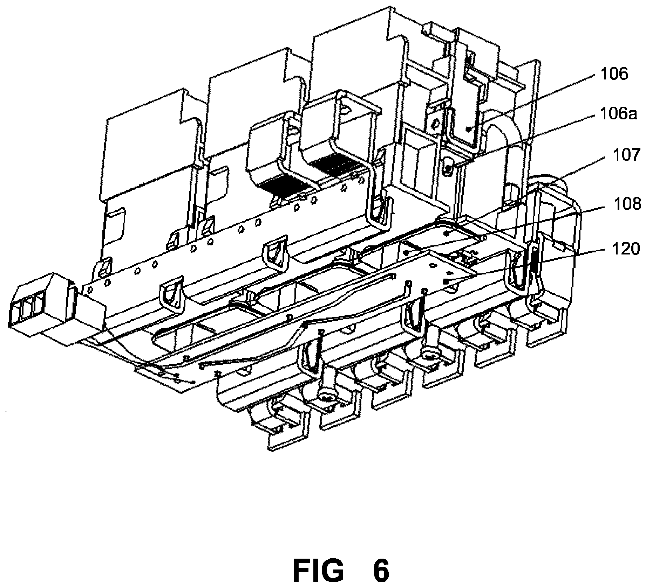

A working process of the pluggable surge protection device of the present invention is described below with reference to FIG. 6 and FIG. 7:

When the non-linear protection element 109 works normally, a temperature of the non-linear protection element 109 is in a normal range. The second pin 109a is electrically connected with the second contact piece 112 through the U-shaped bracket 131 and the flexible connection piece 132 to form a conductive path. The low-melting-point alloy between the U-shaped bracket 131 and the second pin 109a is in a solid state and has enough mechanical strength. Therefore, the releasing lever 106 is supported by the U-shaped bracket 131. The protruding step body on the top of the releasing lever extends upwards to a same height as the indication component 101. The second spring 102 is compressed by the protruding step body on the top of the releasing lever 106. And indication component 101 is limited to be aligned with the position of the indication window 133. It should be noted that, in fact, the releasing lever 106 only needs a surface on the top to limit the indication component 101 and compress the second spring 102. However, considering the strength of the component, the protruding step body is provided. At this moment, the indication component 101 can be observed through the indication window 133, the color of the indication component 101, for example, green is displayed to indicate a normal state. Meanwhile, the first spring 104 is also compressed. The state described above can be described with reference to FIG. 2 and FIG. 6. The support plate 120 in FIG. 6 is a support plate for supporting the micro switch 108. Considering that the intermediate conductor may be implemented in other manners, it may be concluded that the when the non-linear protection element 109 works normally, the second pin 109a is electrically connected with the second contact piece 112 through the intermediate conductor. The releasing lever 106 is supported by the intermediate conductor, the first spring 104 is compressed. The indication component 101 is aligned with the position of the indication window 133, and the second spring 102 is compressed.

When the non-linear protection element 109 works abnormally and causes a rise in temperature, the second pin 109a emits heat, the low-melting-point alloy between the first pin of the U-shaped bracket 131 and the second pin 109a is softened and its mechanical strength is reduced. When the spring force of the first spring 104 is sufficient, the low-melting-point alloy is softened and broken. The first spring 104 releases and extends, the spring force pushes the releasing lever 106 to move downwards, so that the U-shaped bracket 131 also moves downwards and is separated from the second pin 109a. The electrical connection of the second pin 109a and the second contact piece 112 through the U-shaped bracket 131 and the flexible connection piece 132 is cut off and the circuit is disconnected. Disconnection of the circuit can avoid grounding faults, short circuit faults or product combustion. The lower extension portion 106a moves downward along with the U-shaped bracket 131. The downward projection of the lower extension portion 106a contacts the pressing plate 107 and triggers the micro switch 108. The micro switch 108 acts and generates an alarm signal after being triggered. And, when the releasing lever 106 moves downwards along with the U-shaped bracket 131, the protruding step body of the releasing lever 106 no longer limits the indication component 101. The second spring 102 releases and extends, the spring force of the second spring pushes the indication component 101 to move away from the position of the indication window 133 along the supporting component. After the indication component 101 moves away from the indication window 133, the supporting component 103 is observed through the indication window 133. The color of the supporting component 133, for example, red is displayed to indicate that a fault occurs. A fault state is shown in FIG. 7. As shown in FIG. 7, the flexible connection piece 132 is a flexible metal belt, so that the downward movement of the U-shaped bracket 131 will not influence the connection of the flexible connection piece 132 and the second pin of the U-shaped bracket 131. Considering that the intermediate conductor may be implemented in other manners, it may be concluded that when the non-linear protection element 109 works abnormally and causes a rise in temperature, the low-melting-point alloy is softened, the first spring 104 is released and pushes the releasing lever 106 and the intermediate conductor to move, the electrical connection is cut off. The lower extension portion 106a contacts the pressing plate 107 and the pressing plate 107 triggers the micro switch 108. The second spring 102 is released and pushes the indication component 101 to move away from the position of the indication window 133.

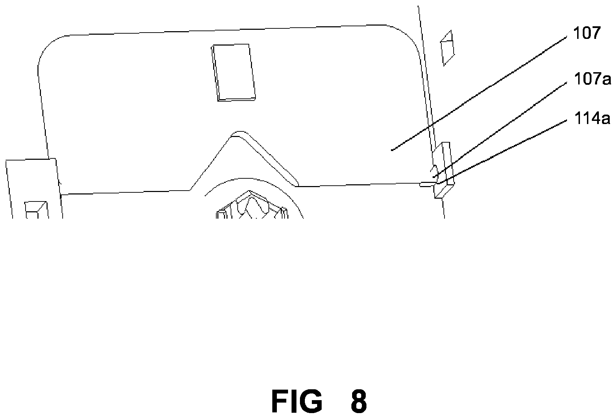

FIG. 8 illustrates a matching schematic diagram of a pressing plate and a base of a pluggable surge protection device according to an embodiment of the present invention. As shown in FIG. 8, two ends of the pressing plate 107 are provided with circular protrusions 107a. A circular hole 114a is formed in the base 114. Circular protrusions 107a are mounted in the circular hole 114a, and the pressing plate 107 is rotatably mounted on the base 114. The pressing plate 107 will rotate when the pressing plate 107 is pushed by the lower extension portion 106a. The rotation of the pressing plate 107 will trigger the micro switch 108, so that the micro switch 108 will generate an alarm signal.

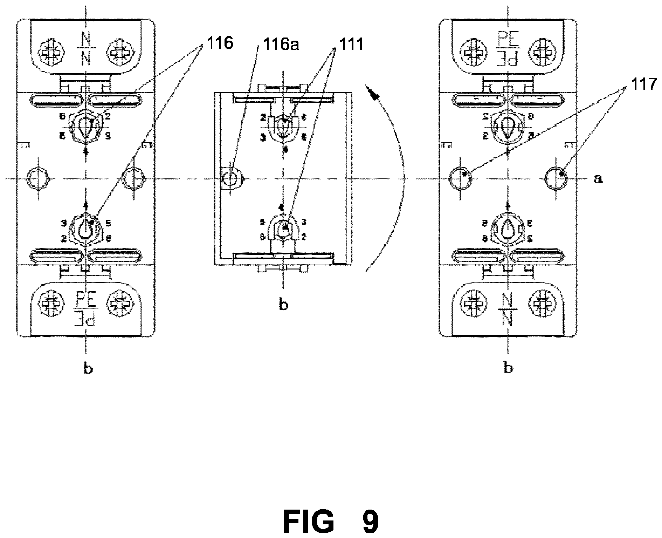

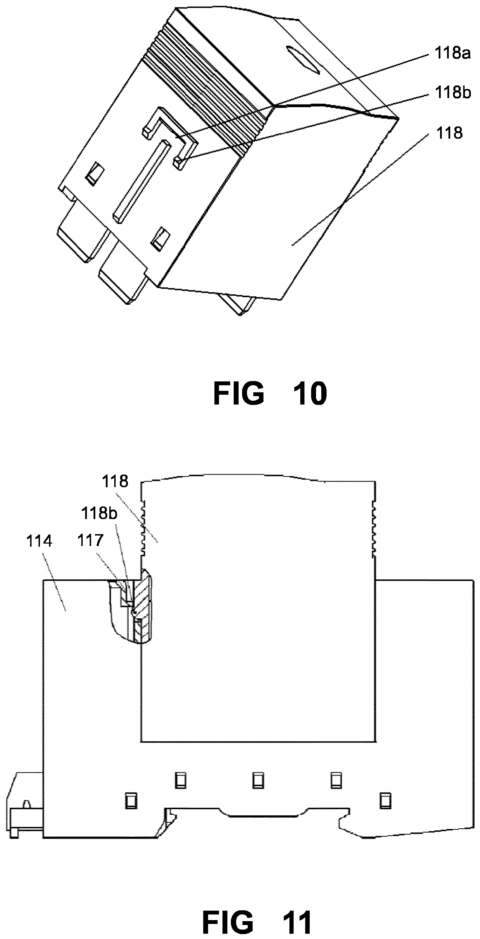

FIG. 9 ∼ FIG. 11 illustrate a positioning mechanism of a pluggable surge protection device according to an embodiment of the present invention. The purpose of the positioning mechanism is that the pluggable module can be perfectly matched with a base no matter when the pluggable module is in a normal position or in a position which is rotated by 180°. Another purpose of the positioning mechanism is to prevent loose, which is realized by utilizing deformation of plastic to carry out locking and arc guiding functions.

Referring to FIG. 9, FIG. 9 illustrates a structural diagram of a positioning mechanism of a pluggable surge protection device according to an embodiment of the present invention, wherein a first positioning element and a second positioning element are shown. The first positioning element 111 and the second positioning element 116 are the positioning components of the positioning mechanism. The first positioning element 111 is mounted at the bottom of the shell 118 of the pluggable module 105. The first positioning element 111 can also be seen in FIG. 1 and FIG. 4. The second positioning element 116 is mounted on the base 114, the second positioning element 116 can also be seen in FIG. 1. The positioning components of the positioning mechanism further comprises an accommodation hole 117 arranged on the base 114 for accommodating the lower extension portion 106a. As shown in FIG. 9a, two first positioning elements 111 are arranged along axis b and are symmetric about axis a. Two second positioning elements 116 are arranged along axis b and are symmetric about axis a. The two first positioning elements 111 and the two second positioning elements 116 are aligned with each other respectively. Two accommodation holes 117 are arranged along axis a and are symmetric about axis b. A lower releasing lever 106a is aligned with one of the accommodation holes 117. Axis a is a longitudinal symmetry axis of the base, and axis b is a transverse symmetry axis of each pluggable module, axis a and axis b are perpendicular to each other. When the arrangement as shown in FIG. 9 is adopted, the pluggable module can be perfectly matched with a base no matter when the pluggable module is in a normal position or in a position which is rotated by 180°. The first positioning element 111 and the second positioning element 116 also function as a fool-proof device, which can avoid a malfunction of the surge protection device caused by a wrong insertion of a pluggable module with a different specification. As shown in the drawings, the first positioning element 111 and the second positioning element 116 comprise a pointer and a number marked around the pointer respectively. The pointer of the first positioning element 111 points to a same number as that pointed by the pointer of the second positioning element 116, which means the pluggable module is matched with the base and the pluggable module can be inserted into the base. If the pointers point to different numbers, then it means the pluggable module is not matched with the base. The pointer of the first positioning element 111 and the pointer of the second positioning element 116 are designed to be in the form of protruding and concave respectively. When the two pointers point to a same number, mutual matching and insertion can be carried out. Otherwise, when the two pointers point to different numbers, the mutual matching cannot be realized. Then the second positioning element 116 on the base cannot be well matched with the first positioning element 111 on the pluggable module, so that pluggable modules with different specifications will be prevented from being inserted into the base.

FIG. 10 and FIG. 11 illustrate a structural diagram of a positioning mechanism of a pluggable surge protection device, a loose preventing mechanism is shown. FIG. 11 illustrates a cross-sectional view of a mating condition of a positioning mechanism of a pluggable surge protection device. The loose preventing mechanism of the positioning mechanism comprises: longitudinal convex strips 118b and transverse convex strips 118a formed on the shell 118, grooves 117 formed in the base 114. The longitudinal convex strips 118b are formed on both two sides of the shell 118. The transverse convex strips 118a are formed on both sides of the shell 118 and are adjacent to the longitudinal convex strip 118b. According to the embodiment illustrated in FIG. 10, the longitudinal convex strip 118b and the transverse convex strip 118a are connected to each other for forming an integrated convex strip structure. A lower end of the longitudinal convex strip 118b protrudes. The protruded lower end is arc-shaped or is provided with bidirectional inclined surfaces. The bidirectional inclined surfaces means inclined angle guides are formed both upwards and downwards.

When the shell 118 of the pluggable module 105 is inserted into the base 114, the longitudinal convex strips 118b are in contact with the base 114. The longitudinal convex strip 118b and its protruded lower end press the base 114, the base 114 is subjected to a deformation and the mounting opening is enlarged. Meanwhile, the arc-shape or inclined surfaces of the protruded lower end of the longitudinal convex strips 118b will guide the shell 118 to enter the mounting opening. When the shell 118 is mounted in place, the longitudinal convex strips 118b are clamped into the grooves 117 and no longer press the base 114. The base 114 recovers from deformation and mounting opening is restored. The grooves 117 and the longitudinal convex strips 118 fix the shell 118 on the base 114. The groove 117 and the longitudinal convex strip 118b form a loose preventing structure to prevent the base and the pluggable module from loosing. When the pluggable module 105 is to be disassembled, the transverse convex strip 118a is pried, the base 114 is subjected to a deformation again during the prying, the mounting opening is enlarged and the shell 118 is detached from the base 114. The arc-shape or inclined surfaces of the protruded lower end of the longitudinal convex strips 118b will guide the shell 118 to exit the mounting opening.

The pluggable surge protection device of the present invention can realize synchronous tripping of multiple nonlinear elements with a safe and reliable tripping accurate state indication. The nonlinear elements are connected in parallel with a plurality of voltage-sensitive chips, and then the parallel circuit is connected with a gas discharge tube in series, so that the circuit can adapt to high-energy waveform impact. A stopping positioning mechanism is arranged on a pluggable module and a base, the pluggable module can be matched with the base in a normal position or in a rotated position with a 180° rotation. The stopping positioning mechanism further enables the pluggable module and the base to be firmly matched without loose.

## Claims

1. A pluggable surge protection device comprising:
a base (114) with a mounting opening, a pressing plate (107) and a micro switch (108) being arranged in the base (114), the micro switch (108) being located beneath the pressing plate (107);
at least one pluggable module (105) mounted to the base (114) through a positioning mechanism, the at least one pluggable module (105) being mounted in the mounting opening, each pluggable module comprising:
a shell (118) with a mounting bracket formed therein, an indication window (133) being formed on the top of the shell (118);
a first contact piece (110) and the second contact piece (112) mounted in the shell (118) for electrical connection;
a non-linear protection element (109) mounted in the shell (118), a first pin (109b) of the non-linear protection element (109) being connected with the first contact piece (110), a second pin (109a) of the non-linear protection element (109) being connected with the second contact piece (112) through an intermediate conductor, wherein the intermediate conductor and the second pin are connected through a low-melting-point alloy;
a releasing lever (106) connected to a first spring (104), the releasing lever (106) being linked with the intermediate conductor, the releasing lever (106) comprising a lower extension portion (106a);
an indication component (101) mounted on the top of the shell (118), the indication component (101) moving horizontally and indication component (101) being connected to a second spring (102), the second spring (102) being mounted between the indication component (101) and the shell (118);
wherein when the non-linear protection element (109) works normally, the second pin (109a) is electrically connected with the second contact piece (112) through the intermediate conductor, the releasing lever (106) is supported by the intermediate conductor, the first spring (104) is compressed, the indication component (101) is restricted by the releasing lever (106) to be aligned with the position of the indication window (133), and the second spring (102) is compressed;
when the non-linear protection element (109) works abnormally and causes a rise in temperature, the low-melting-point alloy is softened, the first spring (104) is released and pushes the releasing lever (106) and the intermediate conductor to move, the electrical connection is cut off; the lower extension portion (106a) contacts the pressing plate (107), which triggers the micro switch (108); the releasing lever (106) is no longer restricting the indication component (101), and the second spring (102) is released and pushes the indication component (101) to move away from the position of the indication window (133).

2. The pluggable surge protection device according to claim 1, wherein
the intermediate conductor comprises a U-shaped bracket (131) and a flexible connection piece (132);
the first contact piece (110) and the second contact piece (112) are located at two sides of the shell (118) respectively, the first contact piece (110) and the second contact piece (112) extend downwards and out of the shell (118);
the non-linear protection element (109) is located between the first contact piece (110) and the second contact piece (112), a first pin (109b) of the non-linear protection element (109) is directly connected with the first contact piece (110), a second pin (109a) of the non-linear protection element (109) is connected with the second contact piece (112) through the U-shaped bracket (131) and the flexible connection piece (132), the second pin (109a) is connected with the U-shaped bracket (131) through the low-melting-point alloy.

3. The pluggable surge protection device according to claim 2, wherein
the releasing lever (106) is mounted in the U-shaped bracket (131), the releasing lever (106) is provided with a protruding step body on the top, the first spring (104) is mounted between the top of the releasing lever (106) and the shell (118); the lower extension portion (106a) of the releasing lever extends to a position beneath the U-shaped bracket (131);
wherein when the non-linear protection element (109) works normally, the releasing lever (106) is supported by the U-shaped bracket (131), the first spring (104) is compressed, the indication component (101) is restricted by the protruding step body of the releasing lever (106) to be aligned with the position of the indication window (133), the second spring (102) is compressed;
when the non-linear protection element (109) works abnormally and causes a rise in temperature, the low-melting-point alloy is softened, the first spring (104) is released and pushes the releasing lever (106) and the U-shaped bracket (131) to move downwards, the lower extension portion (106a) moves downwards and contacts the pressing plate, the protruding step body of the releasing lever (106) is no longer restricting the indication component (101), the second spring (102) is released and pushes the indication component (101) to move away from the position of the indication window (133).

4. The pluggable surge protection device according to claim 2, wherein
the U-shaped bracket (131) is made of a metal material, a first pin of the U-shaped bracket (131) is welded with a second pin (109a) of non-linear protection element (109) through the low-melting-point alloy;
the flexible connection piece (132) is a flexible metal belt and is connected between the second pin of the U-shaped bracket (131) and the second contact piece (112);
the first contact piece (110) or the second contact piece (112) is provided with a notch (110a).

5. The pluggable surge protection device according to claim 1, wherein the non-linear protection element (109) comprises:
a plurality of voltage-sensitive chips (123) which are arranged in a superposition mode, the plurality of voltage-sensitive chips (123) are connected in parallel through a short circuit bus (119).

6. The pluggable surge protection device according to claim 5, wherein the non-linear protection element (109) further comprises:
a gas discharge tube (121), the gas discharge tube (121) is connected in series with the plurality of voltage-sensitive chips which are connected in parallel (123); an insulating plate (122) is arranged between the gas discharge tube (121) and the pressure-sensitive chip (123).

7. The pluggable surge protection device according to claim 1, wherein two ends of the pressing plate (107) are provided with circular protrusions (107a), a circular hole (114a) is formed in the base (114), circular protrusions (107a) are mounted in the circular hole (114a), and the pressing plate (107) is rotatably mounted on the base (114).

8. The pluggable surge protection device according to claim 1, wherein the positioning mechanism comprises:
a first positioning element (111) mounted at the bottom of the shell (118) of the pluggable module (105), a second positioning element (116) mounted on the base (114), an accommodation hole (117) arranged on the base (114) for accommodating the lower extension portion (106a);
wherein two first positioning elements (111) are arranged along axis b and are symmetric about axis a, the two second positioning elements (116) are arranged along axis b and are symmetric about axis a; the two first positioning elements (111) and the two second positioning elements (116) are aligned with each other respectively;
two accommodation holes (117) are arranged along axis a and are symmetric about axis b, a lower releasing lever (106a) is aligned with one of the accommodation holes (117);
wherein axis a is a longitudinal symmetry axis of the base, and axis b is a transverse symmetry axis of each pluggable module; axis a and axis b are perpendicular to each other.

9. The pluggable surge protection device according to claim 1, wherein the positioning mechanism comprises:
longitudinal convex strips (118b) formed on both two sides of the shell (118);
transverse convex strips (118a) formed on both two sides of the shell (118) and being adjacent to the longitudinal convex strip (118b);
grooves (117) formed in the base (114);
wherein the shell (118) is inserted into the base (114), the longitudinal convex strips (118b) are in contact with the base (114) and presses the base (114), the base (114) is subjected to a deformation and the mounting opening is enlarged; the shell (118) is mounted in place, the longitudinal convex strips (118b) are clamped into the grooves (117), the base (114) recovers from deformation and mounting opening is restored, the grooves and the longitudinal convex strips fix the shell (118) on the base (114);
the transverse convex strips are pried, the base (114) is subjected to a deformation again and the mounting opening is enlarged, and the shell (118) is detached from the base (114).

10. The pluggable surge protection device according to claim 9, wherein a lower end of the longitudinal convex strip (118b) protrudes; the protruded lower end is arc-shaped or is provided with bidirectional inclined surfaces.

## Patentansprüche

1. Steckbare Überspannungsschutzvorrichtung mit:
einer Basis (114) mit einer Montageöffnung, einer Andrückplatte (107) und einem Mikroschalter (108), die in der Basis (114) angeordnet sind, wobei sich der Mikroschalter (108) unter der Andrückplatte (107) befindet;
mindestens einem steckbaren Modul (105), das mittels eines Positionierungsmechanismus an der Basis (114) befestigt ist, wobei das mindestens eine steckbare Modul (105) in der Montageöffnung befestigt ist, wobei jedes steckbare Modul umfasst:
einem Gehäuse (118) mit einem darin ausgebildeten Montagehalter, wobei auf der Oberseite des Gehäuses (118) ein Anzeigefenster (133) ausgebildet ist;
einem erstes Kontaktteil (110) und einem zweiten Kontaktteil (112), die zur elektrischen Verbindung in dem Gehäuse (118) angebracht sind;
einem nichtlineares Schutzelement (109), das in dem Gehäuse (118) angebracht ist, wobei ein erster Stift (109b) des nichtlinearen Schutzelements (109) mit dem ersten Kontaktteil (110) verbunden ist, ein zweiter Stift (109a) des nichtlinearen Schutzelements (109) mit dem zweiten Kontaktteil (112) über einen Zwischenleiter verbunden ist, wobei der Zwischenleiter und der zweite Stift mittels einer Legierung mit niedrigem Schmelzpunkt verbunden sind;
einem Freigabehebel (106), der mit einer ersten Feder (104) verbunden ist, wobei der Freigabehebel (106) mit dem Zwischenleiter verbunden ist, wobei der Freigabehebel (106) einen unteren Verlängerungsbereich (106a) aufweist;
einem Anzeigebauteil (101), das an der Oberseite des Gehäuses (118) angebracht ist, wobei sich das Anzeigebauteil (101) horizontal bewegt und das Anzeigebauteil (101) mit einer zweiten Feder (102) verbunden ist, wobei die zweite Feder (102) zwischen dem Anzeigebauteil (101) und dem Gehäuse (118) angebracht ist;
wobei, wenn das nichtlineare Schutzelement (109) normal arbeitet, der zweite Stift (109a) über den Zwischenleiter elektrisch mit dem zweiten Kontaktteil (112) verbunden ist, der Freigabehebel (106) von dem Zwischenleiter gestützt ist, die erste Feder (104) zusammengedrückt ist, das Anzeigebauteil (101) durch den Freigabehebel (106) derart zurückgehalten ist, dass es auf die Position des Anzeigefensters (133) ausgerichtet ist, und die zweite Feder (102) zusammengedrückt ist;
wobei, wenn das nichtlineare Schutzelement (109) abnormal arbeitet und einen Temperaturanstieg verursacht, die Legierung mit niedrigem Schmelzpunkt aufgeweicht wird, die erste Feder (104) freigegeben wird und den Freigabehebel (106) und den Zwischenleiter drückt, um diese zu bewegen, wodurch die elektrische Verbindung unterbrochen wird; der untere Verlängerungsabschnitt (106a) die Andrückplatte (107) berührt, die den Mikroschalter (108) auslöst; der Freigabehebel (106) das Anzeigebauteil (101) nicht länger zurückhält, und die zweite Feder (102) freigegeben wird und gegen das Anzeigebauteil (101) drückt, so dass dieses sich von der Position des Anzeigefensters (133) weg bewegt.

2. Steckbare Überspannungsschutzvorrichtung nach Anspruch 1, bei welcher
der Zwischenleiter einen U-förmigen Bügel (131) und ein flexibles Verbindungsteil (132) aufweist;
das erste Kontaktteil (110) und das zweite Kontaktteil (112) sich auf zwei Seiten des Gehäuses (118) befinden, wobei das erste Kontaktteil (110) und das zweite Kontaktteil (112) sich nach unten und aus dem Gehäuse (118) heraus erstrecken;
das nichtlineare Schutzelement (109) sich zwischen dem ersten Kontaktteil (110) und dem zweiten Kontaktteil (112) befindet, ein erster Stift (109b) des nichtlinearen Schutzelements (109) direkt mit dem ersten Kontaktteil (110) verbunden ist, ein zweiter Stift (109a) des nichtlinearen Schutzelements (109) mit dem zweiten Kontaktteil (112) über den U-förmigen Bügel (131) und das flexible Verbindungsstück (132) verbunden ist, der zweite Stift (109a) mit dem U-förmigen Bügel (131) über die Legierung mit niedrigem Schmelzpunkt verbunden ist.

3. Steckbare Überspannungsschutzvorrichtung nach Anspruch 2, bei welcher
der Freigabehebel (106) in dem U-förmigen Bügel (131) angebracht ist, der Freigabehebel (106) auf der Oberseite mit einem vorstehenden Stufenkörper versehen ist, die erste Feder (104) zwischen der Oberseite des Freigabehebels (106) und dem Gehäuse (118) angebracht ist; der untere Verlängerungsbereich (106a) des Freigabehebels sich bis zu einer Position unterhalb des U-förmigen Bügels (131) erstreckt;
wobei, wenn das nichtlineare Schutzelement (109) normal arbeitet, der Freigabehebel (106) von der U-förmigen Halterung (131) gestützt ist, die erste Feder (104) zusammengedrückt ist, das Anzeigebauteil (101) durch den vorstehenden Stufenkörper des Freigabehebels (106) derart zurückgehalten ist, dass es auf die Position des Anzeigefensters (133) ausgerichtet ist, die zweite Feder (102) zusammengedrückt ist;
wobei, wenn das nichtlineare Schutzelement (109) abnormal arbeitet und einen Temperaturanstieg verursacht, die Legierung mit niedrigem Schmelzpunkt aufgeweicht wird, die erste Feder (104) freigegeben wird und den Freigabehebel (106) und den U-förmigen Bügel (131) drückt, um diese nach unten zu bewegen, der untere Verlängerungsbereich (106a) sich nach unten bewegt und die Andrückplatte berührt, der vorstehende Stufenkörper des Freigabehebels (106) das Anzeigebauteil (101) nicht länger zurückhält, die zweite Feder (102) freigegeben wird und das Anzeigebauteil (101) drückt, so dass dieses sich von der Position des Anzeigefensters (133) weg bewegt.

4. Steckbare Überspannungsschutzvorrichtung nach Anspruch 2, bei welcher
der U-förmige Bügel (131) aus einem Metallmaterial besteht, ein erster Stift des U-förmigen Bügels (131) mit einem zweiten Stift (109a) eines nichtlinearen Schutzelements (109) durch die Legierung mit niedrigem Schmelzpunkt verschweißt ist;
das flexible Verbindungsteil (132) ein flexibler Metallgurt ist und zwischen dem zweiten Stift des U-förmigen Bügels (131) und dem zweiten Kontaktteil (112) verbunden ist;
das erste Kontaktteil (110) oder das zweite Kontaktteil (112) mit einer Kerbe (110a) versehen ist.

5. Steckbare Überspannungsschutzvorrichtung nach Anspruch 1, bei welcher das nichtlineare Schutzelement (109) aufweist:
mehrere spannungsempfindliche Chips (123), die in einem Überlagerungsmodus angeordnet sind, wobei die mehreren spannungsempfindlichen Chips (123) über einen Kurzschlussbus (119) parallel geschaltet sind.

6. Steckbare Überspannungsschutzvorrichtung nach Anspruch 5, bei welcher das nichtlineare Schutzelement (109) ferner aufweist:
eine Gasentladungsröhre (121), wobei die Gasentladungsröhre (121) in Reihe mit den mehreren spannungsempfindlichen Chips (123) geschaltet ist, die parallel geschaltet sind; wobei eine Isolierplatte (122) zwischen der Gasentladungsröhre (121) und dem druckempfindlichen Chip (123) angeordnet ist.

7. Steckbare Überspannungsschutzvorrichtung nach Anspruch 1, bei welcher zwei Enden der Andrückplatte (107) mit kreisförmigen Vorsprüngen (107a) versehen sind, ein kreisförmiges Loch (114a) in der Basis (114) ausgebildet ist, kreisförmige Vorsprünge (107a) in dem kreisförmigen Loch (114a) befestigt sind, und die Andrückplatte (107) drehbar auf der Basis (114) angebracht ist.

8. Steckbare Überspannungsschutzvorrichtung nach Anspruch 1, bei welcher der Positionierungsmechanismus aufweist:
ein erstes Positionierungselement (111), das am Boden des Gehäuses (118) des steckbaren Moduls (105) befestigt ist, ein zweites Positionierungselement (116), das an der Basis (114) befestigt ist, ein auf der Basis (114) angeordnetes Aufnahmeloch (117) zum Aufnehmen des unteren Verlängerungsbereichs (106a);
wobei zwei erste Positionierungselemente (111) entlang einer Achse b angeordnet sind und um eine Achse a symmetrisch sind, die beiden zweiten Positionierungselemente (116) entlang der Achse b angeordnet sind und um die Achse a symmetrisch sind; wobei die beiden ersten Positionierungselemente (111) und die beiden zweiten Positionierungselemente (116) jeweils miteinander fluchten;
zwei Aufnahmelöcher (117), die entlang der Achse a angeordnet sind und um die Achse b symmetrisch sind, wobei ein unterer Freigabehebel (106a) mit einem der Aufnahmelöcher (117) fluchtet;
wobei die Achse a eine Längssymmetrieachse der Basis ist und die Achse b eine Quersymmetrieachse jedes steckbaren Moduls ist; wobei die Achse a und die Achse b senkrecht zueinander sind.

9. Steckbare Überspannungsschutzvorrichtung nach Anspruch 1, wobei der Positionierungsmechanismus aufweist:
konvexe Längsleisten (118b), die auf beiden Seiten des Gehäuses (118) ausgebildet sind;
konvexe Querleisten (118a), die auf beiden Seiten des Gehäuses (118) ausgebildet sind und an den konvexen Längsleisten (118b) angrenzen;
in der Basis (114) ausgebildete Rillen (117);
wobei das Gehäuse (118) in die Basis (114) eingeführt wird, die konvexen Längsleisten (118b) mit der Basis (114) in Kontakt stehen und auf die Basis (114) drücken, die Basis (114) einer Verformung ausgesetzt wird und die Befestigungsöffnung vergrößert wird; wobei das Gehäuse (118) eingebaut wird, die konvexen Längsleisten (118b) in die Rillen (117) eingeklemmt werden, die Basis (114) sich aus der Verformung zurückstellt und die Befestigungsöffnung wiederhergestellt wird, wobei die Rillen und die konvexen Längsleisten das Gehäuse (118) auf der Basis (114) fixieren;
wobei die konvexen Querleisten aufgehebelt werden, die Basis (114) erneut verformt wird und die Befestigungsöffnung vergrößert wird, und das Gehäuse (118) von der Basis (114) gelöst wird.

10. Steckbare Überspannungsschutzvorrichtung nach Anspruch 9, bei welcher ein unteres Ende der konvexen Längsleiste (118b) vorsteht; wobei das vorstehende untere Ende bogenförmig ist oder mit bidirektional geneigten Flächen versehen ist.

## Revendications

1. Dispositif de protection contre les surtensions enfichable comprenant :
une base (114) avec une ouverture de montage, une plaque de pression (107) et un microrupteur (108) étant disposés dans la base (114), le microrupteur (108) étant situé sous la plaque de pression (107) ;
au moins un module enfichable (105) monté sur la base (114) par un mécanisme de positionnement, l'au moins un module enfichable (105) étant monté dans l'ouverture de montage, chaque module enfichable comprenant :
une coque (118) avec un support de montage formé à l'intérieur, une fenêtre d'indication (133) étant formée sur le dessus de la coque (118) ;
une première pièce de contact (110) et la deuxième pièce de contact (112) montées dans la coque (118) pour le raccordement électrique ;
un élément de protection non linéaire (109) monté dans la coque (118), une première broche (109b) de l'élément de protection non linéaire (109) étant reliée à la première pièce de contact (110), une deuxième broche (109a) de l'élément de protection non linéaire (109) étant reliée à la deuxième pièce de contact (112) grâce à un conducteur intermédiaire, dans lequel le conducteur intermédiaire et la deuxième broche sont reliés par un alliage à bas point de fusion ;
un levier de déclenchement (106) relié à un premier ressort (104), le levier de déclenchement (106) étant relié au conducteur intermédiaire, le levier de déclenchement (106) comprenant une partie d'extension inférieure (106a) ;
un élément d'indication (101) monté sur le dessus de la coque (118), l'élément d'indication (101) se déplaçant horizontalement et l'élément d'indication (101) étant relié à un second ressort (102), le second ressort (102) étant monté entre l'élément d'indication (101) et la coque (118) ;
dans lequel, lorsque l'élément de protection non linéaire (109) fonctionne normalement, la deuxième broche (109a) est reliée électriquement à la deuxième pièce de contact (112) par le conducteur intermédiaire, le levier de déclenchement (106) est supporté par le conducteur intermédiaire, le premier ressort (104) est comprimé, l'élément d'indication (101) est limité par le levier de déclenchement (106) pour être aligné avec la position de la fenêtre d'indication (133), et le deuxième ressort (102) est comprimé ;
lorsque l'élément de protection non linéaire (109) fonctionne anormalement et provoque une augmentation de la température, l'alliage à bas point de fusion est ramolli, le premier ressort (104) est relâché et pousse le levier de déclenchement (106) et le conducteur intermédiaire à se déplacer, la connexion électrique est coupée ; la partie d'extension inférieure (106a) entre en contact avec la plaque de pression (107), ce qui déclenche le microrupteur (108) ; le levier de déclenchement (106) ne limite plus l'élément d'indication (101), et le second ressort (102) est relâché et pousse l'élément d'indication (101) à s'éloigner de la position de la fenêtre d'indication (133).

2. Dispositif de protection contre les surtensions enfichable selon la revendication 1, dans lequel le conducteur intermédiaire comprend un support en forme de U (131) et une pièce de raccordement flexible (132) ;
la première pièce de contact (110) et la deuxième pièce de contact (112) sont situées respectivement sur deux côtés de la coque (118), la première pièce de contact (110) et la deuxième pièce de contact (112) s'étendent vers le bas et hors de la coque (118) ;
l'élément de protection non linéaire (109) est situé entre la première pièce de contact (110) et la deuxième pièce de contact (112), une première broche (109b) de l'élément de protection non linéaire (109) est directement reliée à la première pièce de contact (110), une deuxième broche (109a) de l'élément de protection non linéaire (109) est reliée à la deuxième pièce de contact (112) par l'intermédiaire du support en forme de U (131) et de la pièce de connexion flexible (132), la deuxième broche (109a) est reliée au support en forme de U (131) par l'intermédiaire de l'alliage à bas point de fusion.

3. Dispositif de protection contre les surtensions enfichable selon la revendication 2, dans lequel le levier de déclenchement (106) est monté dans le support en forme de U (131), le levier de déclenchement (106) est muni d'un corps en saillie sur le dessus, le premier ressort (104) est monté entre le dessus du levier de déclenchement (106) et la coque (118) ; la partie d'extension inférieure (106a) du levier de déclenchement s'étend jusqu'à une position en dessous du support en forme de U (131) ;
dans lequel, lorsque l'élément de protection non linéaire (109) fonctionne normalement, le levier de déclenchement (106) est supporté par le support en forme de U (131), le premier ressort (104) est comprimé, l'élément d'indication (101) est limité par le corps en saillie du levier de déclenchement (106) pour être aligné avec la position de la fenêtre d'indication (133), le second ressort (102) est comprimé ;
lorsque l'élément de protection non linéaire (109) fonctionne anormalement et provoque une augmentation de la température, l'alliage à bas point de fusion est ramolli, le premier ressort (104) est relâché et pousse le levier de déclenchement (106) et le support en forme de U (131) à se déplacer vers le bas, la partie d'extension inférieure (106a) se déplace vers le bas et entre en contact avec la plaque de pression, le corps en saillie du levier de déclenchement (106) ne limite plus l'élément d'indication (101), le second ressort (102) est relâché et pousse l'élément d'indication (101) à s'éloigner de la position de la fenêtre d'indication (133).

4. Dispositif de protection contre les surtensions enfichable selon la revendication 2, dans lequel le support en forme de U (131) est fait d'un matériau métallique, une première broche du support en forme de U (131) est soudée avec une deuxième broche (109a) d'un élément de protection non linéaire (109) à travers l'alliage à bas point de fusion ;
la pièce de connexion flexible (132) est une courroie métallique flexible et est connectée entre la deuxième broche du support en forme de U (131) et la deuxième pièce de contact (112) ;
la première pièce de contact (110) ou la deuxième pièce de contact (112) est pourvue d'une encoche (110a).

5. Dispositif de protection contre les surtensions enfichable selon la revendication 1, dans lequel l'élément de protection non linéaire (109) comprend :
une pluralité de puces sensibles à la tension (123) qui sont disposées de manière superposée, la pluralité de puces sensibles à la tension (123) sont connectées en parallèle par un bus de court-circuit (119).

6. Dispositif de protection contre les surtensions enfichable selon la revendication 5, dans lequel l'élément de protection non linéaire (109) comprend en outre :
un tube à décharge gazeuse (121), le tube à décharge gazeuse (121) étant connecté en série avec la pluralité de puces sensibles à la tension qui sont connectées en parallèle (123) ; une plaque isolante (122) est disposée entre le tube à décharge gazeuse (121) et la puce sensible à la pression (123).

7. Dispositif de protection contre les surtensions enfichable selon la revendication 1, dans lequel deux extrémités de la plaque de pression (107) sont pourvues de saillies circulaires (107a), un trou circulaire (114a) est formé dans la base (114), des saillies circulaires (107a) sont montées dans le trou circulaire (114a), et la plaque de pression (107) est montée de manière rotative sur la base (114).

8. Dispositif de protection contre les surtensions enfichable selon la revendication 1, dans lequel le mécanisme de positionnement comprend :
un premier élément de positionnement (111) monté au fond de la coque (118) du module enfichable (105), un second élément de positionnement (116) monté sur la base (114), un trou de logement (117) disposé sur la base (114) pour recevoir la partie d'extension inférieure (106a) ;
dans lequel deux premiers éléments de positionnement (111) sont disposés le long de l'axe b et sont symétriques par rapport à l'axe a, les deux seconds éléments de positionnement (116) sont disposés le long de l'axe b et sont symétriques par rapport à l'axe a ; les deux premiers éléments de positionnement (111) et les deux seconds éléments de positionnement (116) sont respectivement alignés les uns par rapport aux autres ;
deux trous de logement (117) sont disposés le long de l'axe a et sont symétriques par rapport à l'axe b, un levier de déclenchement inférieur (106a) est aligné avec l'un des trous de logement (117) ;
dans lequel l'axe a est un axe de symétrie longitudinal de la base, et l'axe b est un axe de symétrie transversal de chaque module enfichable ; l'axe a et l'axe b sont perpendiculaires l'un à l'autre.

9. Dispositif de protection contre les surtensions enfichable selon la revendication 1, dans lequel le mécanisme de positionnement comprend :
des bandes convexes longitudinales (118b) formées sur les deux côtés de la coque (118) ;
des bandes convexes transversales (118a) formées sur les deux côtés de la coque (118) et adjacentes à la bande convexe longitudinale (118b) ;
des rainures (117) formées dans la base (114) ;
dans lequel la coque (118) est insérée dans la base (114), les bandes convexes longitudinales (118b) sont en contact avec la base (114) et pressent la base (114), la base (114) est soumise à une déformation et l'ouverture de montage est élargie ; la coque (118) est montée en place, les bandes convexes longitudinales (118b) sont serrées dans les rainures (117), la base (114) récupère de la déformation et l'ouverture de montage est rétablie, les rainures et les bandes convexes longitudinales fixent la coque (118) sur la base (114) ;
les bandes transversales convexes sont ouvertes, la base (114) est soumise à une nouvelle déformation et l'ouverture de montage est élargie, et la coque (118) est détachée de la base (114).

10. Dispositif de protection contre les surtensions enfichable selon la revendication 9, dans lequel une extrémité inférieure de la bande convexe longitudinale (118b) fait saillie ; l'extrémité inférieure en saillie est en forme d'arc ou est pourvue de surfaces inclinées bidirectionnelles.
